# EUROPÄISCHE PATENTSCHRIFT

(11) **EP 0 522 305 B1**
(45) Veröffentlichungstag und Bekanntmachung des Hinweises auf die Patenterteilung: **03.01.1996**
(21) Anmeldenummer: 92109965.1
(22) Anmeldetag: 13.06.1992
(51) Int. Cl.: G02B 6/28, B29D 11/00, B23K 20/10, G02B 6/255

(54) **Verfahren zur Herstellung eines Verbindungselements für aus Kunststoff bestehende, lichtleitende Fasern**
Method of fabrication of a connecting element for plastic optical fibres
Procédé de fabrication d'un élément de connexion pour fibres optiques en plastic

(30) Priorität: 27.06.1991 DE 4121216
(43) Veröffentlichungstag der Anmeldung: 13.01.1993
(73) Patentinhaber: kabelmetal electro GmbH, D-30002 Hannover (DE)
(72) Erfinder: Bachnik, Rainer, W-8520 Erlangen (DE); Chille, Wolfgang, W-8507 Oberasbach (DE); Schauer, Friedrich, W-8501 Heroldsberg (DE)

(56) Entgegenhaltungen:
- EP-A- 488 309
- EP-A- 0 403 896
- EP-A- 0 428 951
- EP-A- 0 439 125
- WO-A-91/06394
- DE-A- 3 940 642

## Beschreibung

Die Erfindung betrifft ein Verfahren zur Herstellung eines Kopplers für aus Kunststoff bestehende, lichtleitende Fasern, mit welchem mindestens drei mit einem optischen Mantel versehene Fasern parallel zueinander verlaufend mittels einer einen Amboß und eine Sonotrode aufweisenden Ultraschalleinrichtung unter der Einwirkung von Wärme und Druck miteinander verschmolzen werden, mit welchem die Fasern unter Erhalt ihrer optischen Mäntel einander berührend in eine Vertiefung des Ambosses eingelegt werden und bei welchem mittels der Sonotrode während des Verschmelzens der Fasern Druck auf dieselben ausgeübt wird.

Ein derartiger Koppler wird beispielsweise bei Vorrichtungen benötigt, in denen mehrere Signalquellen vorhanden sind, die alle gleichberechtigt miteinander korrespondieren können sollen. Solche Vorrichtungen sind beispielsweise Kraftfahrzeuge oder Werkzeugmaschinen. Damit von allen Signalquellen Signale zu allen anderen Signalquellen gesendet und auch von allen anderen Signalquellen empfangen werden können, sind entsprechende leitende Verbindungen aller Signalquellen untereinander erforderlich. Wenn dabei jede Signalquelle mit jeder anderen Signalquelle direkt verbunden wird, ergibt sich bereits ab drei Signalquellen eine große Anzahl von Fasern mit komplizierter, schlecht zu übersehender Anordnung.

Dieser Aufwand kann bei Einsatz des Verfahrens nach der EP-A-0 403 896 vermieden werden. Mit diesem bekannten Verfahren wird ein Sternkoppler hergestellt, in dem eine Anzahl von aus Kunststoff bestehenden Fasern in einem parallel liegenden Bereich miteinander verschmolzen ist. Von einer Faser auf einer Seite des Schmelzbereichs zugeführtes Licht wird auf der anderen Seite des Schmelzbereichs auf alle Fasern gleichmäßig verteilt. Signalquellen, die mit je einem Faserende auf beiden Seiten des Schmelzbereichs verbunden sind, können daher miteinander Signale austauschen. Dabei müssen an jede Signalquelle nur die beiden Faserenden angeschlossen werden. Der Aufwand zur Herstellung dieses Sternkopplers ist relativ hoch, da die Fasern in dem für den Schmelzvorgang vorgesehenen Bereich zunächst von ihren optischen Mänteln befreit werden müssen. Das kann auf mechanischem oder auf chemischem Wege erfolgen. In beiden Fällen muß sehr sorgfältig vorgegangen werden, damit die Fasern nicht beschädigt werden. Hinzu kommt bei diesem Verfahren, daß das eingesetzte Werkzeug für den Schmelzvorgang insgesamt auf 170 °C aufgeheizt und nach dem Verschmelzen der Fasern wieder abgekühlt werden muß. Das bedingt nicht nur einen hohen Energieeinsatz, sondern es ist auch zeitaufwendig. Allein für das Abkühlen des Systems auf eine unter 100 °C liegende Temperatur werden nach Angaben dieser Druckschrift 10 Minuten benötigt. Während dieser Zeit bleibt der auf die Fasern ausgeübte Druck bestehen.

Bei dem Verfahren nach der älteren, als Stand der Technik gemäß Art. 54(3) EPÜ geltenden EP-A-0 488 309 werden Polymerlichtwellenleiter mittels Ultraschalls miteinander zu einem Koppler verschweißt, nachdem sie vorher während einer Zeitdauer von 0,2 bis 3 Stunden auf eine zwischen 50 °C und 250 °C liegende Temperatur erwärmt worden sind. Über die Länge des Bereichs, in dem die Polymerlichtwellenleiter miteinander verschweißt sind, enthält die EP-A-0 488 309 keine Aussagen. Die Polymerlichtwellenleiter können auch mit einem in einem Kunststoffröhrchen befindlichen Mischerstab verschweißt werden.

Der Erfindung liegt die Aufgabe zugrunde, das eingangs geschilderte Verfahren so zu gestalten, daß ein das eingespeiste Licht gleichmäßig verteilender Koppler mit wenig Aufwand hergestellt werden kann.

Diese Aufgabe wird gemäß der Erfindung dadurch gelöst, daß die Länge des Bereichs, in dem die Fasern miteinander verschmolzen werden, zwischen dem zweifachen und dem zehnfachen des Durchmessers der Fasern gewählt wird.

Bei diesem Verfahren wird eine Ultraschalleinrichtung eingesetzt, bei der lediglich die Gestaltung von Amboß und Sonotrode auf Anzahl und Abmessungen der zu verbindenden Fasern abgestimmt sein muß. Für das Verschmelzen ist keine Erwärmung des Werkzeugs erforderlich und es muß nach dem Verschmelzen der Fasern auch nichts abgekühlt werden. Das Verfahren arbeitet also mit geringem apparativem und zeitlichem Aufwand. Von wesentlicher Bedeutung für das Verfahren ist, daß die Fasern ohne Vorbehandlung in das Werkzeug eingelegt werden, da sie ihre optischen Mäntel behalten. Es hat sich herausgestellt, daß die sehr dünnen optischen Mäntel den Verschmelzungsvorgang nicht beeinträchtigen. Im fertigen Koppler sind keine durch das Material der optischen Mäntel hervorgerufenen störenden Einschlüsse enthalten. Durch die angegebene Bemessung des Verschmelzungsbereichs ergibt sich ein in beiden Übertragungsrichtungen wirkender Mischer, durch den das auf einer Seite eingespeiste Licht gleichmäßig auf die von der gegenüberliegenden Seite des Kopplers weiterführenden Fasern verteilt wird.

Das Verfahren nach der Erfindung wird anhand der Zeichnungen als Ausführungsbeispiel erläutert.

Es zeigen:

Fig. 1 einen mit dem Verfahren nach der Erfindung hergestellten Koppler in schematischer Darstellung.

Fig. 2 eine Vorrichtung zur Durchführung des Verfahrens in stark vereinfachter Darstellung.

Fig. 3 eine Einsatzmöglichkeit des Kopplers.

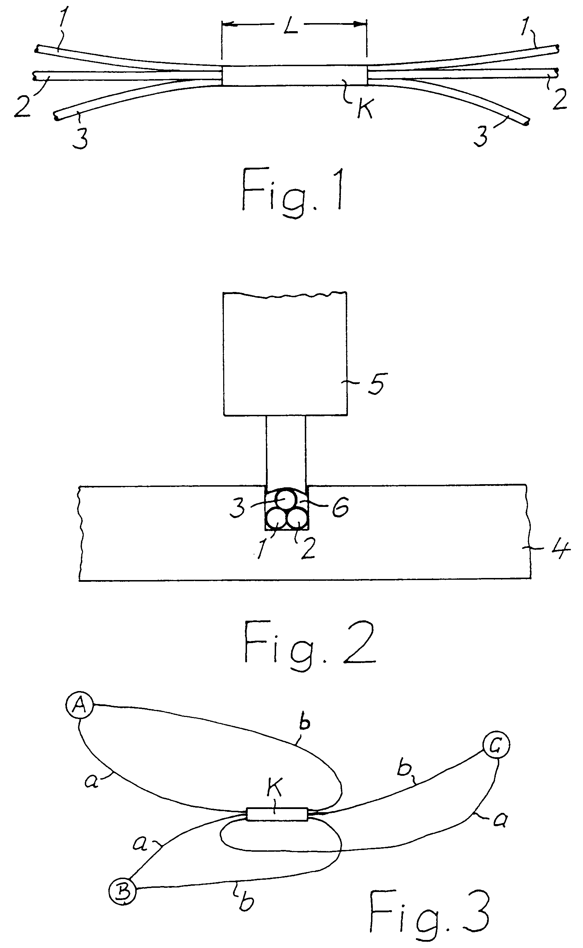

Der in Fig. 1 dargestellte Koppler K besteht aus Kunststoff. Geeignete Materialien sind beispielsweise Polycarbonat (PC) und Polymetylmetacrylat (PMMA). In dem Koppler K sind drei Fasern 1, 2 und 3 miteinander verschmolzen. Es können aber auch mehr als drei Fasern im Koppler K zusammengefaßt sein. Die Länge L des Kopplers K ist so bemessen, daß das von jeder der Fasern 1, 2 oder 3 auf einer Seite desselben eingespeiste Licht gleichmäßig auf die von der gegenüberliegenden Seite des Kopplers K weiterführenden Fasern verteilt wird. Sie liegt zwischen dem Zweifachen und dem Zehnfachen des Durchmessers der Fasern 1, 2 oder 3.

Die Länge L wird auch von der Wellenlänge des über die Fasern 1, 2 und 3 zu übertragenden Lichts beeinflußt, die vorzugsweise zwischen 660 nm und 800 nm liegt. Der Koppler K kann beispielsweise eine Länge L haben, die zwischen 0,75 cm und 1,5 cm liegt.

Bei richtiger Bemessung hat der Koppler K die Funktion eines in beiden Übertragungsrichtungen wirkenden Mischers. Diese Funktion ist insbesondere dann erfüllt, wenn sichergestellt ist, daß das Licht an den Rändern des Kopplers K total reflektiert wird. Das kann durch Auftragen eines optischen Mantels auf die Oberfläche des Kopplers K nach seiner Fertigstellung erreicht werden.

Zur Herstellung eines Kopplers K wird eine in Fig. 2 stark vereinfacht dargestellte Ultraschalleinrichtung verwendet, von der ein Amboß 4 und eine Sonotrode 5 wiedergegeben sind. Der Amboß 4 dient gleichzeitig als Werkzeug zur Aufnahme der zu verschmelzenden Fasern. Er hat dazu eine Vertiefung 6, deren Breite auf den Durchmesser der zu verbindenden Fasern abgestimmt ist. Im dargestellten Ausführungsbeispiel liegen drei Fasern 1, 2 und 3 in der Vertiefung 6, deren Breite der gemeinsamen Breite der Fasern 1 und 2 entspricht. Die Fasern 1 und 2 liegen also an der Wandung der Vertiefung 6 an. Die drei Fasern 1, 2 und 3 sollen zu einem Koppler K verschmolzen werden. Dazu wird die Sonotrode 5 mit ihrer auf die Abmessungen der Vertiefung 6 und die Anzahl der Fasern abgestimmten Spitze bis zur Anlage an den Fasern 1, 2 und 3 gebracht. Beim Einschalten der Ultraschalleinrichtung führen die Schwingungsenergie und der von der Sonotrode 5 ausgeübte Druck zu einer Verschmelzung der Fasern 1, 2 und 3 zum Koppler K.

Für die Herstellung eines Kopplers K werden nach dem Einlegen der drei mit optischen Mänteln versehenen Fasern 1, 2 und 3 in die Vertiefung 6 etwa zwei Sekunden benötigt, während derer keine wesentliche Erwärmung des Werkzeugs stattfindet. Der fertige Koppler K kann dann direkt aus dem Werkzeug entnommen und gegebenenfalls mit einem optischen Mantel versehen werden.

Eine Einsatzmöglichkeit eines Kopplers K nach Fig. 1 geht in prinzipieller Darstellung aus Fig. 3 für ein System hervor, in dem drei Signalquellen A, B und C vorhanden sind, die alle gleichberechtigt miteinander Signale austauschen können sollen. Jede der Signalquellen A, B und C ist über zwei Fasern a und b an den Koppler K angeschlossen, und zwar derart, daß jeweils die Faser a an einer Seite des Kopplers K angeschlossen ist, während die Faser b mit der anderen Seite desselben verbunden ist. Wenn die Signalquelle A beispielsweise ein Signal an die Signalquelle C schicken will, dann wird dieses Signal über die Faser a der Signalquelle A zum Koppler K geleitet und von dort über deren Faser b der Signalquelle C zugeführt. Bei den hier als Fasern a und b bezeichneten Fasern handelt es sich um die im Koppler K verschmolzenen Fasern 1, 2 und 3. "Faser a" ist also beispielsweise der eine Teil der Faser 1 auf der einen Seite des Kopplers K, während "Faser b" deren anderer Teil auf der anderen Seite des Kopplers K ist.

Da von beiden Seiten des Kopplers K jeweils drei Fasern der drei Signalquellen A, B und C ausgehen, tritt das von der Signalquelle A kommende Licht auch in die Fasern b der eigenen und der Signalquelle B ein. Es muß daher mit jedem Signal gleichzeitig eine bestimmte Kennung ausgesandt werden, die sicherstellt, daß das Signal ausschließlich von der gewünschten Signalquelle empfangen wird. Dabei kann der Empfänger der sendenden Signalquelle von der empfangenden Signalquelle eine Bestätigung bzw. Quittung erhalten. Es ist allerdings auch möglich, während der Zeit des Sendens den eigenen Empfänger abzuschalten. Das eigene Signal soll auf jeden Fall nicht über die eigene Faser b empfangen werden. Eine dafür geeignete Technik ist beispielsweise das bekannte Multiplexverfahren.

Anhand von Fig. 3 ist der Einsatz des Verbindungselements für drei Signalquellen beschrieben. Es können selbstverständlich auch mehr als drei Signalquellen sein, die über einen entsprechend erweiterten Koppler K mit mehr als drei Fasern verbunden werden.

## Patentansprüche

1. Verfahren zur Herstellung eines Kopplers (K) für aus Kunststoff bestehende, lichtleitende Fasern, (1,2,3), mit welchem mindestens drei mit einem optischen Mantel versehene Fasern (1,2,3) parallel zueinander verlaufend mittels einer einen Amboß (4) und eine Sonotrode (5) aufweisenden Ultraschalleinrichtung unter der Einwirkung von Wärme und Druck miteinander verschmolzen werden, mit welchem die Fasern (1,2,3) unter Erhalt ihrer optischen Mäntel einander berührend in eine Vertiefung (6) des Ambosses (4) eingelegt werden und bei welchem mittels der Sonotrode (5) während des Verschmelzens der Fasern (1,2,3) Druck auf dieselben ausgeübt wird, wobei die Länge (L) des Bereichs, in dem die Fasern (1,2,3)miteinander verschmolzen werden, zwischen dem Zweifachen und dem Zehnfachen des Durchmessers der Fasern (1,2,3) gewählt wird.

## Claims

1. Process for the production of a coupler (K) for optical fibres (1, 2, 3) consisting of plastics, by which process at least three fibres (1, 2, 3), which are provided with an optical sheath, are fused to one another, running parallel to one another, under the action of heat and pressure, by means of an ultrasonic apparatus having an anvil (4) and a sonotrode (5), by which process the fibres (1, 2, 3), whilst preserving their optical sheaths, are inserted in contact with one another into a recess (6) of the anvil (4), and in which process pressure is exerted on the fibres, by means of the sonotrode (5), during the fusing of the fibres (1, 2, 3), the length (L) of the region in which the fibres (1, 2, 3) are fused to one another being selected to be between twice and ten times the diameter of the fibres (1, 2, 3).

## Revendications

1. Procédé de fabrication d'un coupleur (K) pour des fibres optiques (1, 2, 3) constituées de plastique, avec lequel on fait fondre ensemble, sous l'action de la chaleur et de la pression, trois fibres (1, 2, 3) munies d'une gaine optique et orientées parallèlement l'une à l'autre, au moyen d'un dispositif à ultrasons comprenant une enclume (4) et une presse à ultrasons sonotrode (5), avec lequel on place les fibres (1, 2, 3), au contact l'une de l'autre, dans une cavité (6) de l'enclume (4), en conservant l'organe optique, et dans le cas duquel, pendant la fusion des fibres (1, 2, 3) on exerce sur elles une pression au moyen de la presse à ultrasons sonotrode (5), la longueur (L) de la zone sur laquelle les fibres (1, 2, 3) sont fondues l'une avec l'autre étant choisie entre le double et le décuple du diamètre des fibres (1, 2, 3).
